(19) Europäisches Patentamt
European Patent Office
Office européen des brevets

(11) **EP 1 244 519 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**19.09.2012   Patentblatt 2012/38**

(45) Hinweis auf die Patenterteilung:
**01.03.2006   Patentblatt 2006/09**

(21) Anmeldenummer: **00981310.6**

(22) Anmeldetag: **21.11.2000**

(51) Int Cl.:
**B01J 27/26** $^{(2006.01)}$         **C08G 65/10** $^{(2006.01)}$
**C08G 65/26** $^{(2006.01)}$

(86) Internationale Anmeldenummer:
**PCT/EP2000/011835**

(87) Internationale Veröffentlichungsnummer:
**WO 2001/039883 (07.06.2001 Gazette 2001/23)**

(54) **VERFAHREN ZUR HERSTELLUNG VON DMC-KATALYSATOREN**

METHOD FOR PRODUCING DMC CATALYSTS

PROCEDE DE PRODUCTION DE CATALYSEURS DE CYANURE BIMETALLIQUE (DMC)

(84) Benannte Vertragsstaaten:
**AT BE CH CY DE DK ES FI FR GB GR IE IT LI LU MC NL PT SE TR**
Benannte Erstreckungsstaaten:
**RO**

(30) Priorität: **03.12.1999   DE 19958355**

(43) Veröffentlichungstag der Anmeldung:
**02.10.2002   Patentblatt 2002/40**

(73) Patentinhaber: **Bayer MaterialScience AG**
**51368 Leverkusen (DE)**

(72) Erfinder:
• **HOFMANN, Jörg**
  **47829 Krefeld (DE)**
• **KLINKSIEK, Bernd**
  **51429 Bergisch Gladbach (DE)**
• **EHLERS, Stephan**
  **50937 Köln (DE)**
• **FECHTEL, Thorsten**
  **50858 Köln (DE)**
• **FÖHLES, Franz**
  **47918 Tönisvorst (DE)**
• **OOMS, Pieter**
  **47800 Krefeld (DE)**

(56) Entgegenhaltungen:
**EP-A- 0 101 007      WO-A-97/40086**
**WO-A-99/19063      US-A- 5 470 813**
**US-A- 5 891 818      US-A- 5 900 384**

EP 1 244 519 B2

**Beschreibung**

Die Erfindung betrifft ein verbessertes Verfahren zur Herstellung von Doppelmetallcyanid(DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind seit langem bekannt (siehe beispielsweise US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethem mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden.

DMC-Katalysatoren werden gewöhnlich erhalten, indem man eine wässrige Lösung eines Metallsalzes mit der wässrigen Lösung eines Metallcyanidsalzes in Gegenwart eines organischen Komplexliganden, z.B. eines Ethers, umsetzt. In einer typischen Katalysatorpräparation werden beispielsweise wässrige Lösungen von Zinkchlorid (im Überschuss) und Kaliumhexacyanocobaltat gemischt und anschließend Dimethoxyethan (Glyme) zur gebildeten Dispersion gegeben. Nach Filtration und Waschen des Katalysators mit wässriger Glyme-Lösung wird ein aktiver Katalysator der allgemeinen Formel

$$Zn_3[Co(CN)_6]_2 \text{ x } ZnCl_2 \text{ y } H_2O \text{ z Glyme}$$

erhalten (siehe z.B. EP-A 700 949).

Das übliche Verfahren zur Herstellung von DMC-Katalysatoren besteht darin, in einem Rührreaktor wässrige Lösungen eines Metallsalzes und eines Metallcyanidsalzes in Gegenwart eines oder mehrerer organischer Komplexliganden unter Bildung einer Katalysatordispersion zu mischen. Um eine hohe Katalysatoraktivität zu erreichen, ist i.a. intensives Rühren unter hoher Scherung erforderlich. Nachteilig hierbei ist, dass bei Verwendung großer Rührreaktoren aufgrund niedriger Leistungsdichten ein hoher Energieaufwand notwendig ist, und eine stark ungleichmäßige Leistungsdichteverteilung vorliegt. Üblicherweise liegt die Leistungsdichte von Rührreaktoren bei etwa $10^4$ W/m³. Nachteilig ist weiterhin, dass bei intensivem Rühren Schaumbildung im Reaktor auftritt, was zu einer Reduktion von Katalysatorausbeute und -aktivität führt.

In US-A 5 891 818 wird ein verbessertes Verfahren zur Herstellung von DMC-Katalysatoren mit erhöhter Katalysatorausbeute und Aktivität sowie reduzierter Teilchengröße beschrieben, bei dem die DMC-Katalysatordispersion in einem Rührreaktor hergestellt wird, wobei ein Teil der Katalysatordispersion zirkuliert und in den Reaktorkopfraum gesprüht und der zirkulierende Strom durch einen "high shear in-line mixer" geführt wird. Darunter ist z.B. ein hochtouriger Rotor-Stator-Mischer zu verstehen. Nachteilig bei diesem Verfahren ist, dass die Schaumbildung nicht vollständig unterdrückt werden kann und dass ein mehrmaliges Zirkulieren des gesamten Reaktorinhalts durch den "high shear in-line mixer" erforderlich ist, um gleichmäßige Katalysatoraktivität und Teilchengröße zu erreichen. Weiterhin ist der für das Rühren erforderliche Energieaufwand sehr hoch und die Kombination eines Rührreaktors mit einer Zirkulationsschleife, einem "high shear in-line mixer" und Sprühdüsen apparativ aufwendig.

Es wurde jetzt gefunden, dass DMC-Katalysatoren mit weiter erhöhter Aktivität, reduzierter Teilchengröße und engerer Teilchengrößenverteilung erhalten werden können, wenn die Herstellung der DMC-Katalysatordispersion unter Einsatz einer Mischdüse, bevorzugt eines Strahldispergators erfolgt. Weitere Vorteile dieses Verfahrens im Vergleich zu der in US-A 5 891 818 beschriebenen Verfahrensvariante sind der niedrigere Energieaufwand bei der Scherung, die höhere Leistungsdichte (ca. $10^{13}$ W/m³) im Vergleich zur Verwendung eines Rührkessels, die problemlose Übertragbarkeit in einen größeren Maßstab sowie der deutlich vereinfachte apparative Aufbau durch Wegfall des Rührreaktors. Polyetherpolyole, die durch DMC-Katalysatoren erhalten werden, die nach diesem Verfahren hergestellt werden, weisen zudem eine reduzierte Viskosität auf im Vergleich zu Polyetherpolyolen, die durch DMC-Katalysatoren erhalten werden, die nach dem in US-A 5 891 818 beschriebenen Verfahren herstellt werden.

Gegenstand der vorliegenden Erfindung ist daher ein verbessertes Verfahren zur Herstellung von DMC-Katalysatoren, bei dem Lösungen wasserlöslicher Salze von Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) oder Cr (III) mit Lösungen wasserlöslicher, Cyanidionen enthaltender Salze oder Säuren von Fe(II), Fe(III), Co(II), Co(III), Cr(II), Cr(III), Mn(II), Mn(III), Ir(III), Ni(II), Rh(III), Ru (II), V(IV) oder V(V) unter Einsatz einer Mischdüse, bevorzugt eines Strahldispergators, vermischt werden.

Die in den für das erfindungsgemäße Verfahren geeigneten DMC-Katalysatoren enthaltenen Doppelmetallcyanid-Verbindungen sind die Reaktionsprodukte wasserlöslicher Metallsalze und wasserlöslicher Metallcyanidsalze.

Zur Herstellung der Doppelmetallcyanid-Verbindungen geeignete wasserlösliche Metallsalze besitzen bevorzugt die allgemeine Formel (I)

$$M(X)_n \qquad (I),$$

wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleiche oder verschiedene, vorzugsweise gleiche Anionen, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)-bromid, Eisen(II)chlorid, Cobalt(II)chlorid, Cobalt(II)thiocyanat, Nickel (II)chlorid und Nickel(II)nitrat. Es können auch Mischungen verschiedener wasserlöslicher Metallsalze eingesetzt werden.

Zur Herstellung der Doppelmetallcyanid-Verbindungen geeignete wasserlösliche Metallcyanidsalze besitzen bevorzugt die allgemeine Formel (II)

$$(Y)a\ M'(CN)_b\ (A)_c \qquad (II),$$

wobei M' ausgewählt wird aus den Metallen Fe(II), Fe(III), Co(II), Co(III), Cr(II), Cr(III), Mn(II), Mn(III), Ir(III), Ni(II), Rh (III), Ru(II), V(IV) und V(V). Besonders bevorzugt wird M' ausgewählt aus den Metallen Co(II), Co(III), Fe(II), Fe(III), Cr (III), Ir(III) und Ni(II). Das wasserlösliche Metallcyanidsalz kann eines oder mehrere dieser Metalle enthalten. Y sind gleiche oder verschiedene, vorzugsweise gleiche Alkalimetallkationen oder Erdalkalimetallkationen. A sind gleiche oder verschiedene, vorzugsweise gleiche Anionen, ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a, als auch b und c sind ganzzahlig, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Anstelle der Alkali- oder Erdalkalimetallcyanidsalze können auch die korrespondierenden Säuren eingesetzt werden. Diese lassen sich beispielsweise durch Kationenaustausch aus den Alkali- oder Erdalkalimetallcyanidsalzen erhalten, z.B. mittels Kationenaustauscherharzen.

Bevorzugte Doppelmetallcyanid-Verbindungen, die in den DMC-Katalysatoren enthalten sind, sind Verbindungen der allgemeinen Formel (III)

$$M_x[M'_x,(CN)_y]_z \qquad (III),$$

worin M wie in Formel (I) und M' wie in Formel (II) definiert ist, und x, x', y und z ganzzahlig und so gewählt sind, dass die Elektroneutralität der Doppelmetallcyanid-verbindung gegeben ist. Vorzugsweise ist x = 3, x' = 1, y = 6 und z = 2, M = Zn(II), Fe(II), Co(II) oder Ni(II) und M' = Co(III), Fe(III), Cr(III) oder Ir(III).

Beispiele geeigneter Doppelmetallcyanidverbindungen sind Zinkhexacyanocobaltat(III), Zinkhexacyanoiridat (III), Zinkhexacyanoferrat(III) und Cobalt(II)hexacyanocobaltat(III). Weitere Beispiele geeigneter Doppelmetallcyanid-Verbindungen sind z.B. US-A 5 158 922 (Spalte 8, Zeilen 29 - 66) zu entnehmen. Besonders bevorzugt verwendet wird Zinkhexacyanocobaltat(III).

Die in den für das erfindungsgemäße Verfahren geeigneten DMC-Katalysatoren enthaltenen organischen Komplexliganden a) sind im Prinzip bekannt und ausführlich im Stand der Technik beschrieben (siehe z.B. US-A 5 158 922 Spalte 6, Zeilen 9-65, US-A 3 404 109, US-A 3 829 505, US-A 3 941 849, EP-A0 700 949, EP-A 761 708, JP-A 4 145 123, US-A 5 470 813, EP-A 743 093 und WO 97/40086). Bevorzugte organische Komplexliganden a) sind wasserlösliche, organische Verbindungen mit Heteroatomen, wie Sauerstoff, Stickstoff, Phosphor oder Schwefel, die mit der Doppelmetallcyanid-Verbindung Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, isoButanol, sek.-Butanol und tert.-Butanol. Besonders bevorzugt ist tert.-Butanol.

Der organische Komplexligand a) wird entweder während der Katalysatorpräparation zugegeben oder unmittelbar nach Bildung der Dispersion der Doppelmetallcyanid-verbindung. Gewöhnlich wird der organische Komplexligand a) im Überschuss eingesetzt.

Bevorzugt für das erfindungsgemäße Verfahren sind DMC-Katalysatoren, die neben den oben angeführten organischen Komplexliganden a) noch eine weitere organische komplexbildende Komponente b) enthalten. Diese Komponente b) kann aus den gleichen Klassen von Verbindungen ausgewählt werden wie Komplexligand a). Bevorzugt ist Komponente b) ein Polyether, Polyester, Polycarbonat, Glycidylether, Glycosid, Carbonsäureester mehrwertiger Alkohole, Polyalkylenglykolsorbitanester, eine Gallensäure oder deren Salz, Ester oder Amid, ein Cyclodextrin, organisches Phosphat, Phosphit, Phosphonat, Phosphonit, Phosphinat oder Phosphinit, eine ionische oberflächen- bzw. grenzflächenaktive Verbindung oder ein α,β-ungesättigter Carbonsäureester. DMC-Katalysatoren mit derartigen Ligandenkombinationen sind z.B. beschrieben in EP-A 700 949, EP-A 761 708, WO 97/40086, WO 99/33562, WO 98/16310, WO 99/01203, WO 99/19062, WO 99/19063 oder der Deutschen Patentanmeldung 19905611.0.

In den für das erfindungsgemäße Verfahren geeigneten DMC-Katalysatoren können gegebenenfalls noch Wasser und/oder ein oder mehrere wasserlösliche Metallsalze der Formel (I) aus der Herstellung der Doppelmetallcyanid-Verbindung enthalten sein.

Erfindungsgemäß erfolgt die Herstellung der DMC-Katalysatordispersion unter Einsatz einer Mischdüse (z.B. einer Glattstrahldüse, Levosdüse, Boschdüse und ähnlichem), bevorzugt unter Einsatz eines Strahldispergators.

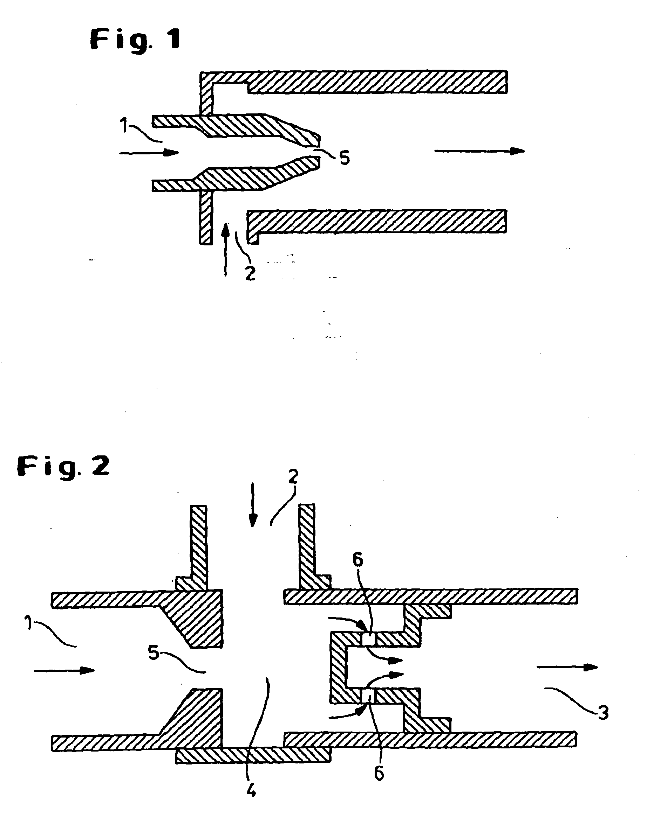

Der prinzipielle Aufbau und die Wirkungsweise geeigneter Mischorgane soll im folgenden beschrieben werden. Fig. 1 zeigt den schematischen Aufbau einer einfachen Glattstrahldüse. Der Eduktstrom 1 wird zunächst in der Düse 3 beschleunigt und mit hoher Strömungsgeschwindigkeit in den langsam fließenden Eduktstrom 2 verdüst. Dabei wird Eduktstrom 2 beschleunigt und Eduktstrom 1 abgebremst. Ein Teil der kinetischen Energie von Eduktstrahl 1 wird bei diesem Vorgang in Wärme umgewandelt und steht somit für den Vermischungsvorgang nicht mehr zur Verfügung. Die Vermischung der beiden Eduktströme erfolgt anschließend über den turbulenten Zerfall des resultierenden Strahls in Wirbel unterschiedlicher Größe (Wirbelkaskade). Im Vergleich zum Rührkessel können auf diese Weise Konzentrationsunterschiede deutlich schneller abgebaut werden, da deutlich größere und homogenere Leistungsdichten erzielt werden können. Die mittlere Leistungsdichte P berechnet sich dabei nach der folgenden Formel:

$$P = \frac{\Delta p * \dot{V}}{V}$$

mit:

$\Delta p$: Druckverlust in der Düse
$\dot{V}$: Volumenstrom
$V$: Volumen der Düsenbohrung

Der Einsatz solcher Düsen soll im folgenden als Methode 1 bezeichnet werden.

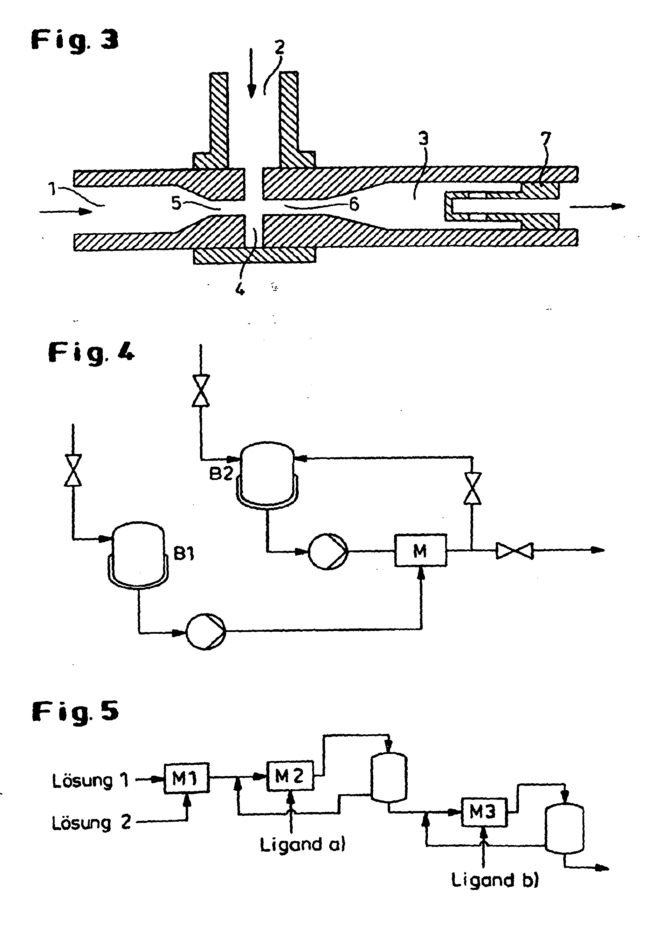

Bevorzugt sollte für das erfindungsgemäße Verfahren jedoch ein Strahldispergator wie er in Fig. 2 oder Fig. 3 dargestellt ist, eingesetzt werden. Der Strahldispergator kann so aufgebaut sein (Fig. 2), dass zwei Düsen 5 und 6 hintereinander angeordnet sind. Der Eduktstrom 1 wird in der Düse 5 durch die Querschnittsverengung zunächst stark beschleunigt. Der beschleunigte Strahl saugt dabei aufgrund der hohen Strömungsgeschwindigkeit die zweite Komponente an. Der Abstand der Düsen wird bevorzugt so gewählt werden, dass in der Mischkammer 4 aufgrund der kurzen Verweilzeit nur Keimbildung jedoch kein Kristallwachstum erfolgt. Maßgeblich für die optimale Auslegung des Strahldispergators ist somit die Keimbildungsgeschwindigkeit des Feststoffs. Günstigerweise wird eine Verweilzeit von 0,0001 s bis 0,15 s, vorzugsweise 0,001 s bis 0,1 s eingestellt. Das Kristallwachstum erfolgt erst im Ablauf 3. Der Durchmesser der Düsen 6 sollte bevorzugt so gewählt werden, dass dort eine weitere Beschleunigung der teilweise gemischten Edukteströme erfolgt. Aufgrund der dadurch in den Düsen 6 zusätzlich auftretenden Scherkräfte wird im Vergleich zur Methode 1 der Zustand der homogenen Vermischung durch einen schnelleren Wirbelzerfall in kürzerer Zeit erreicht. Dadurch ist es im Gegensatz zu Methode 1 selbst bei Fällungsreaktionen mit sehr hoher Keimbildungsgeschwindigkeit möglich, den Zustand einer idealen Vermischung der Edukte zu erreichen, so dass die Einstellung von definierten stöchiometrischen Zusammensetzungen während der Fällungsreaktion möglich ist. Als günstig haben sich Düsendurchmesser von 5000 $\mu$m bis 50 $\mu$m, vorzugsweise 2000 $\mu$m bis 200 $\mu$m erwiesen bei Druckverlusten in der Düse von 0,1 bar bis 1000 bar oder Leistungsdichten im Bereich von $1*10^7$ W/m$^3$ bis $1*10^{13}$ W/m$^3$. Dieser Vermischungsvorgang soll im folgenden mit Methode 2 bezeichnet werden.

Je nach gewünschter Partikelgröße können noch n Düsen (mit n = 1 - 5) nachgeschaltet werden, so dass man einen mehrstufigen Strahldispergator erhält. In Fig. 3 ist ein solcher mehrstufiger Strahldispergator gezeigt. Im Anschluss an die Düse 6 wird die Dispersion noch einmal durch die Düse 7 geführt. Für die Auslegung der Düsendurchmesser gilt das gleiche wie für Düse 6.

Der zusätzliche Vorteil weiterer Dispergatoren gegenüber der Methode 2 besteht darin, dass durch die großen Scherkräfte in den Düsen bereits gebildete Partikel mechanisch zerkleinert werden können. Auf diese Weise ist es möglich, Partikel mit Durchmessern von 10 $\mu$m bis 0,1 $\mu$m herzustellen. Anstelle mehrerer hintereinander geschalteter Düsen kann die Zerkleinerung aber auch durch Kreislaufführung der Dispersion erreicht werden. Der Einsatz solcher Düsen wird im folgenden mit Methode 3 gekennzeichnet.

Andere Mischorgane zur Herstellung von Dispersionen, wie sie in EP-A 101 007, WO 95/30476 oder der Deutschen Patentanmeldung 199 28 123.8 beschrieben sind, oder Kombinationen dieser Mischorgane können ebenfalls eingesetzt werden.

Durch die Energiedissipation in den Düsen und durch die Kristallisationsenthalpie kann es zu einer Erwärmung der Dispersion kommen. Da die Temperatur einen wesentlichen Einfluss auf den Kristallbildungsprozeß haben kann, kann für die isotherme Prozessführung hinter dem Mischorgan ein Wärmeübertrager eingebaut werden.

Ein problemloses Scale-up ist beispielsweise möglich durch den Einsatz einer größeren Zahl von Bohrungen, die Parallelschaltung mehrerer Mischorgane oder die Vergrößerung der freien Düsenfläche. Letzteres wird jedoch nicht durch eine Erhöhung des Düsendurchmessers erreicht, da auf diese Weise die Möglichkeit des Auftretens eines Kernstroms besteht, wodurch eine Verschlechterung des Mischergebnisses resultiert. Bei Düsen mit großen freien Düsenflächen sind deswegen bevorzugt Schlitze mit entsprechender Fläche einzusetzen.

Die Herstellung der DMC-Katalysatordispersion erfolgt erfindungsgemäß unter Einsatz einer Mischdüse, bevorzugt eines Strahldispergators. Beispiele geeigneter Apparaturen sind in Fig. 4 und 5 gezeigt. Fig. 4 zeigt ein semibatch-Verfahren unter Einsatz eines Schlaufenreaktors, Fig.5 ein kontinuierliches Verfahren zur Herstellung der DMC-Katalysatordispersion.

Die Herstellung der DMC-Katalysatordispersion nach dem erfindungsgemäßen Verfahren erfolgt üblicherweise in wässriger Lösung durch Umsetzung von

α) Metallsalzen, insbesondere der Formel (I) mit

β) Metallcyanidsalzen, insbesondere der Formel (II) oder den korrespondierenden Säuren,

γ) organischen Komplexliganden a),

und gegebenenfalls

δ) einer oder mehrerer weiterer organischer komplexbildender Komponenten b).

Bevorzugt werden dabei zunächst die wässrigen Lösungen des Metallsalzes, z.B. Zinkchlorid, eingesetzt im stöchiometrischen Überschuss (mindestens 50 Mol-% bezogen auf das Metallcyanidsalz), und des Metallcyanidsalzes, z.B. Kaliumhexacyanocobaltat (oder der korrespondierenden Säure), in Gegenwart des organischen Komplexliganden a), der z.B. tert.-Butanol sein kann, umgesetzt, wobei sich eine Dispersion bildet. Erfindungsgemäß erfolgt die Herstellung dieser DMC-Katalysatordispersion unter Einsatz einer Mischdüse, bevorzugt eines Strahldispergators.

Die Herstellung der DMC-Katalysatordispersion im Semibatchverfahren unter Verwendung eines Strahldispergators in Kombination mit einem Schlaufenreaktor (gemäß Fig. 4) wird im folgenden erläutert. Hierbei kann entweder die wässrige Metallsalzlösung aus dem Behälter B2 im Kreis geführt und die wässrige Metallcyanidlösung aus Behälter B1 zudosiert werden, oder umgekehrt. Bei der Vereinigung beider Ströme im Mischorgan M kommt es zur Bildung einer Dispersion der DMC-Verbindung. Die Herstellung der Dispersion der DMC-Verbindung kann nach Methode 1, 2 oder 3 erfolgen, bevorzugt nach Methode 2 oder 3. Der Vorteil dieser Methoden besteht in der Möglichkeit, während des gesamten Fällungsvorgangs ein konstantes Eduktverhältnis zu realisieren.

Bevorzugt wird die gebildete Dispersion nach der Fällung noch einige Minuten bis mehrere Stunden im Kreislauf durch den Strahldispergator geführt.

Die Düsendurchmesser liegen dabei bevorzugt zwischen 2000 μm bis 200 μm bei Druckverlusten in der Düse zwischen 0,1 bar bis 1000 bar.

Der organische Komplexligand a) kann dabei in der wässrigen Lösung des Metallsalzes und/ oder des Metallcyanidsalzes vorhanden sein, oder er wird der nach Ausfällung der Doppelmetallcyanid-Verbindung erhaltenen Dispersion unmittelbar zudosiert (über Behälter B1 oder B2).

Bevorzugt wird der im Kreislauf durch den Strahldispergator zirkulierenden Dispersion anschließend noch eine weitere organische komplexbildende Komponente b) über Behälter B1 oder B2 zudosiert. Die weitere organische komplexbildende Komponente b) wird dabei bevorzugt in einer Mischung aus Wasser und organischem Komplexliganden a) eingesetzt.

Die Dosierung der weiteren organischen komplexbildenden Komponente b) in den Kreislauf und ein anschließendes Rezirkulieren findet bevorzugt unter Druckverlusten in der Düse zwischen 0,001 bar und 10 bar statt.

Erfindungsgemäß kann die DMC-Katalysatordispersion auch in einem kontinuierlichen Verfahren, wie es beispielhaft in Fig. 5 gezeigt ist, hergestellt werden. Die wässrigen Lösungen des Metallsalzes und des Metallcyanidsalzes werden nach Methode 1, 2 oder 3 im Mischorgan M1 umgesetzt, wobei sich eine Dispersion bildet. Der organische Komplexligand a) kann dabei in der wäßrigen Lösung des Metallsalzes und/ oder des Metallcyanidsalzes vorhanden sein. In diesem Fall entfällt in Fig. 5 die Mischstufe M2. Möglich ist auch die Zugabe des organischen Komplexliganden a) nach der Ausfällung der Doppelmetallcyanid-Verbindung über das Mischorgan M2. Zur Erhöhung der Verweilzeit der Dispersion kann diese über das Mischorgan M2 im Kreislauf gefahren werden. Im Anschluss kann im Mischorgan M3 die weitere organische komplexbildende Komponente b) - bevorzugt in einer Mischung aus Wasser und organischem Komplexliganden a) - zugegeben und zur Erhöhung der Verweilzeit rezirkuliert werden.

Die Isolierung des Katalysators aus der Dispersion erfolgt durch bekannte Techniken, wie Zentrifugation oder Filtration. In einer bevorzugten Ausführungsvariante wird der isolierte Katalysator anschließend mit einer wässrigen Lösung des organischen Komplexliganden a) gewaschen (z.B. durch Redispergieren und anschließende erneute Isolierung durch Filtration oder Zentrifugation). Auf diese Weise können wasserlösliche Nebenprodukte wie Kaliumchlorid, aus dem erfindungsgemäßen Katalysator entfernt werden.

Bevorzugt beträgt die Menge des organischen Komplexliganden a) in der wässrigen Waschlösung 40 bis 80 Gew.%, bezogen auf die Gesamtlösung. Bevorzugt ist es weiterhin, der wässrigen Waschlösung etwas an weiterer organischer komplexbildender Komponente b) zuzufügen, bevorzugt 0,5 bis 5 Gew.%, bezogen auf die Gesamtlösung.

Der Wasch- bzw. Redispergierschritt kann in einem konventionellen Rührreaktor durchgeführt werden. Bevorzugt ist es aber, die Redispergierung durch Kreislaufführung durch den Strahldispergator vorzunehmen. Dadurch wird die Katalysatoraktivität weiter gesteigert. Die Zirkulationszeiten bei der Redispergierung liegen bevorzugt zwischen einigen Minuten und mehreren Stunden.

Außerdem ist es vorteilhaft, den Katalysator mehr als einmal zu waschen, um dessen Aktivität weiter zu erhöhen. Hierzu kann z.B. der erste Waschvorgang wiederholt werden. Bevorzugt ist es aber, für weitere Waschvorgänge nichtwässrige Lösungen zu verwenden, z.B. eine Mischung aus organischem Komplexliganden a) und der weiteren organischen komplexbildenden Komponente b). Auch die weiteren Waschschritte werden bevorzugt durch Kreislaufführung durch den Strahldispergator vorgenommen.

Der gewaschene Katalysator wird anschließend, gegebenenfalls nach Pulverisierung, bei Temperaturen von im allgemeinen 20 - 100˚C und bei Drücken von im allgemeinen 0,1 mbar bis Normaldruck (1013 mbar) getrocknet.

Die nach dem erfindungsgemäßen Verfahren hergestellten DMC-Katalysatoren können wegen ihrer außerordentlich hohen Aktivität häufig in sehr niedrigen Konzentrationen eingesetzt werden (25 ppm und weniger, bezogen auf die Menge des herzustellenden Polyetherpolyols). Werden die in Gegenwart der nach dem erfindungsgemäßen Verfahren hergestellten DMC-Katalysatoren hergestellten Polyetherpolyole zur Herstellung von Polyurethanen verwendet, kann auf eine Entfernung des Katalysators aus dem Polyetherpolyol verzichtet werden, ohne dass die Produktqualitäten des erhaltenen Polyurethans nachteilig beeinflusst werden.

### Beispiele

### Katalysatorherstellung

### Beispiel 1: Katalysator A

In einem Schlaufenreaktor, der einen Strahldispergator gemäß Fig.2 (4 Bohrungen mit Durchmesser 0,7 mm) enthält, wird eine Lösung aus 52 g Kaliumhexacyanocobaltat in 910 g destilliertem Wasser zirkuliert. Hierzu wird eine Lösung aus 162,5 g Zinkchlorid in 260 g destilliertem Wasser zudosiert. Der Druckverlust im Strahldispergator beträgt dabei 2,0 bar. Unmittelbar nach der Fällung wird eine Mischung aus 650 g tert.-Butanol und 650 g destilliertem Wasser zudosiert und die Dispersion 16 min bei einem Druckverlust im Strahldispergator von 2,0 bar zirkuliert. Dann wird eine Mischung aus 13 g Cholsäure-Natriumsalz, 13 g tert.-Butanol und 1300 g destilliertem Wasser zudosiert und die Dispersion anschließend 10 min bei einem Druckverlust im Strahldispergator von 0,1 bar zirkuliert. Der Feststoff wird durch eine Filtration isoliert und anschließend mit einer Mischung aus 13 g Cholsäure-Natriumsalz, 910 g tert.-Butanol und 390 g destilliertem Wasser durch Zirkulieren im Schlaufenreaktor bei einem Druckverlust im Strahldispergator von 2,0 bar 8 min gewaschen. Der Feststoff wird erneut filtriert und abschließend noch einmal mit einer Mischung aus 6,5 g Cholsäure-Natriumsalz und 1300 g tert.-Butanol durch Zirkulieren im Schlaufenreaktor bei einem Druckverlust im Strahldispergator von 2,0 bar 8 min gewaschen. Nach Filtration wird der Katalysator bei 100˚C 5 h im Hochvakuum getrocknet.

### Beispiel 2: Katalysator B

Es wurde verfahren wie in Beispiel 1, jedoch wurden die beiden Waschschritte nicht durch Zirkulieren im Schlaufenreaktor durch den Strahldispergator, sondern durch Rühren (900 U/min) in einem konventionellen Rührreaktor durchgeführt.

### Beispiel 3 (Vergleich): Katalysator C

Herstellung des DMC-Katalysators in einem konventionellen Rührreaktor

In einem konventionellen Rührreaktor gibt man zu einer Lösung von 52 g Kaliumhexacyanocobaltat in 910 g destilliertem Wasser unter Rühren (900 U/min) eine Lösung aus 162,5 g Zinkchlorid in 260 g destilliertem Wasser. Unmittelbar danach wird eine Mischung aus 650 g tert.-Butanol und 650 g destilliertem Wasser zugegeben und die Dispersion 16 min bei 900 U/min gerührt. Dann wird eine Mischung aus 13 g Cholsäure-Natriumsalz, 13 g tert.-Butanol und 1300 g destilliertem Wasser zugegeben und 8 min bei 900 U/min gerührt. Der Feststoff wird durch eine Filtration isoliert und anschließend mit einer Mischung aus 13 g Cholsäure-Natriumsalz, 910 g tert.-Butanol und 390 g destilliertem Wasser 8 min unter Rühren (900 U/min) gewaschen. Der Feststoff wird erneut filtriert und abschließend noch einmal mit einer Mischung aus 6,5 g Cholsäure-Natriumsalz und 1300 g tert.-Butanol 8 min unter Rühren (900 U/min) gewaschen. Nach Filtration wird der Katalysator bei 100°C 5 h im Hochvakuum getrocknet.

**Beispiel 4 (Vergleich):** Katalysator D

Es wurde verfahren wie in Beispiel 3 (Vergleichsbeispiel), jedoch wurde, wie in US-A 5 891 818 beschrieben, die DMC-Katalysatordispersion in einem Rührreaktor hergestellt und die Dispersion in einer Zirkulationsschleife durch einen "high-shear in-line mixer" zirkuliert.

Die Teilchengrößen und Teilchengrößenverteilungen der gefällten und mit Liganden behandelten DMC-Katalysatordispersionen wurden durch Laserkorrelationsspektroskopie bestimmt. Die Ergebnisse gehen aus Tabelle 1 hervor:

<div align="center"><b>Tabelle 1:</b></div>

| Beispiel | Mittlere Teilchengröße | Polydispersität |
|---|---|---|
| 1,2 | 2,57 $\mu$m | 0,213 |
| 3 (Vergleichsbeispiel) | 4,51 $\mu$m | 0,254 |
| 4 (Vergleichsbeispiel) | 2,78 $\mu$m | 0,248 |

Die Ergebnisse in Tabelle 1 zeigen, dass durch das erfindungsgemäße Verfahren DMC-Katalysatoren mit reduzierter Teilchengröße und engerer Teilchengrößenverteilung (Polydispersität) erhalten werden (Beispiele 1 und 2), im Vergleich zu DMC-Katalysatoren, die nach Verfahren des Standes der Technik hergestellt wurden (Vergleichsbeispiele 3 und 4).

**Herstellung von Polyetherpolyolen**

**Allgemeine Durchführung**

In einem 500 ml Druckreaktor werden 50 g Polypropylenglykol-Starter (Molekulargewicht = 1 000 g/mol) und 5 mg Katalysator (25 ppm, bezogen auf die Menge des herzustellenden Polyetherpolyols) unter Schutzgas (Argon) vorgelegt und unter Rühren auf 105°C aufgeheizt. Anschließend wird Propylenoxid (ca. 5 g) auf einmal zudosiert, bis der Gesamtdruck auf 2,5 bar angestiegen ist. Weiteres Propylenoxid wird erst dann wieder zudosiert, wenn ein beschleunigter Druckabfall im Reaktor beobachtet wird. Dieser beschleunigte Druckabfall zeigt an, dass der Katalysator aktiviert ist. Anschließend wird das restliche Propylenoxid (145 g) kontinuierlich bei einem konstanten Gesamtdruck von 2,5 bar zudosiert. Nach vollständiger Propylenoxid-Dosierung und 2 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung.

**Beispiel 5:** Herstellung von Polyetherpolyol mit Katalysator A (25 ppm)

| | | |
|---|---|---|
| Propoxylierungszeit: | | 42 min |
| Polyetherpolyol: | OH-Zahl (mg KOH/g): | 29,7 |
| | Doppelbindungsgehalt (mMol/kg): | 6 |
| | Viskosität 25°C (mPas): | 846 |

**Beispiel 6:** Herstellung von Polyetherpolyol mit Katalysator B (25 ppm)

| Propoxylierungszeit: | | 68 min |
|---|---|---|
| Polyetherpolyol: | OH-Zahl (mg KOH/g): | 30,3 |
| | Doppelbindungsgehalt (mMol/kg): | 6 |
| | Viskosität 25˚C (mPas): | 869 |

**Beispiel 7 (Vergleich):** Herstellung von Polyetherpolyol mit Katalysator C (25 ppm)

Katalysator C (25 ppm) zeigt unter den oben beschriebenen Reaktionsbedingungen keine Aktivität.

**Beispiel 8 (Vergleich):** Herstellung von Polyetherpolyol mit Katalysator D (25 ppm)

| Propoxylierungszeit: | | 109 min |
|---|---|---|
| Polyetherpolyol: | OH-Zahl (mg KOH/g): | 30,8 |
| | Doppelbindungsgehalt (mMol/kg): | 7 |
| | Viskosität 25˚C (mPas): | 876 |

Ein Vergleich der Beispiele 5 und 6 mit den Vergleichsbeispielen 7 und 8 zeigt, dass durch das erfindungsgemäße Verfahren DMC-Katalysatoren mit deutlich erhöhter Aktivität (d.h. deutlich reduzierten Propoxylierungszeiten) erhalten werden.

**Patentansprüche**

1. Verfahren zur Herstellung von DMC-Katalysatoren, bei dem Lösungen wasserlöslicher Salze von Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II) oder Cr(III) mit Lösungen wasserlöslicher, Cyanidionen enthaltender Salze oder Säuren von Fe(II), Fe(III), Co(II), Co(III), Cr(II), Cr(III), Mn(II), Mn(III), Ir(III), Ni(II), Rh(III), Ru(II), V(IV) oder V(V) unter Einsatz einer Mischdüse vermischt werden.

2. Verfahren zur Herstellung von DMC-Katalysatoren nach Anspruch 1, bei dem die Lösungen unter Einsatz eines Strahldispergators vermischt werden.

3. Verfahren nach Anspruch 1 oder 2, bei dem der DMC-Katalysator aus der durch Vermischung der Lösungen gebildeten Katalysatordispersion isoliert und anschließend unter Einsatz eines Strahldispergators in wässriger oder wasserfreier Ligandenlösung redispergiert wird.

4. Verfahren nach einem der Ansprüche 1 bis 3, bei dem der DMC-Katalysator als Doppelmetallcyanid-Verbindung Zinkhexacyanocobaltat(III) enthält.

5. Verfahren nach einem der Ansprüche 1 bis 4, bei dem der DMC-Katalysator als organischen Komplexliganden tert.-Butanol enthält.

6. Verfahren nach einem der Ansprüche 1 bis 5, bei dem der DMC-Katalysator eine organische komplexbildende Komponente enthält, die ein Polyether, Polyester, Polycarbonat, Glycidylether, Glycosid, Carbonsäureester mehrwertiger Alkohole, Polyalkylenglykolsorbitanester, eine Gallensäure oder deren Salz, Ester oder Amid, ein Cyclodextrin, organisches Phosphat, Phosphit, Phosphonat, Phosphonit, Phosphinat oder Phosphinit, eine ionische oberflächen- bzw. grenzflächenaktive Verbindung oder ein $\alpha,\beta$-ungesättigter Carbonsäureester ist.

**Claims**

1. Method of producing DMC catalysts, in which solutions of water-soluble salts of Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II) or Cr(III) are mixed with solutions of water-soluble salts or acids, containing cyanide ions, of Fe(II), Fe(III), Co(II), Co(III), Cr(II), Cr(III), Mn(II), Mn(III), Ir(III), Ni(II), Rh(III), Ru(II), V(IV) or V(V) using a mixing nozzle.

2. Method of producing DMC catalysts according to Claim 1, in which the solutions are mixed using a jet disperser.

3. Method according to Claim 1 or 2, in which the DMC catalyst is isolated from the catalyst dispersion formed by mixing the solutions and then redispersed using a jet disperser in aqueous or anhydrous ligand solution.

4. Method according to any one of Claims 1 to 3, in which the DMC catalyst contains zinc hexacyanocobaltate(III) as double metal cyanide compound.

5. Method according to any one of Claims 1 to 4, in which the DMC catalyst contains tert-butanol as organic complex ligand.

6. Method according to any one of Claims 1 to 5, in which the DMC catalyst contains an organic complex-forming component that is a polyether, polyester, polycarbonate, glycidyl ether, glycoside, carboxylic ester of polyhydric alcohols, polyalkylene glycol sorbitan ester, a bile acid or its salt, ester or amide, a cyclodextrin, organic phosphate, phosphite, phosphonate, phosphonite, phosphinate or phosphinite, an ionic surfactant or interface-active compound or an $\alpha,\beta$-unsaturated carboxylic ester.

**Revendications**

1. Procédé pour la préparation de catalyseurs à base de cyanures métalliques doubles (CMD) selon lequel on mélange des solutions de sels solubles dans l'eau de Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II), ou Cr(III) avec des solutions de sels ou acides, solubles dans l'eau, contenant des ions cyanures, de Fe(II), Fe(III), Co(II), Co(III), Cr(II), Cr(III), Mn(II), Mn(III), Ir(III), Ni(II), Rh(III), Ru(II), V(IV) ou V(V) à l'aide d'une tuyère de mélange.

2. Procédé pour la préparation de catalyseurs à base de CMD selon la revendication 1, selon lequel les solutions sont mélangées à l'aide d'un éjecteur.

3. Procédé selon les revendications 1 ou 2, selon lequel le catalyseur à base de CMD est isolé de la dispersion de catalyseur formée par mélange des solutions puis redispersé dans une solution aqueuse ou anhydre de ligand à l'aide d'un éjecteur.

4. Procédé selon l'une des revendications 1 à 3, selon lequel le catalyseur à base de CMD contient en tant que cyanure métallique double l'hexacyanocobaltate (III) de zinc.

5. Procédé selon l'une des revendications 1 à 4, selon lequel le catalyseur à base de CMD contient du tert-butanol en tant que ligand de complexe organique.

6. Procédé selon l'une des revendications 1 à 5, selon lequel le catalyseur à base de CMD contient un composant organique complexant consistant en un polyéther, un polyester, un polycarbonate, un éther glycidylique, un glucoside, un ester d'acide carboxylique et d'alcool polyfonctionnel, un ester de sorbitol polyoxyalkyléné, un acide biliaire ou l'un de ses sels, esters ou amides, une cyclodextrine, un phosphate, phosphite, phosphonate, phosphonite, phosphinate ou phosphinite organique, un agent tensioactif ionique ou un ester d'acide carboxylique $\alpha,\beta$-insturé.

## Fig. 1

## Fig. 2

**Fig. 3**

**Fig. 4**

**Fig. 5**

Lösung 1 → M1
Lösung 2 → M1 → M2 ← Ligand a) → M3 ← Ligand b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3404109 A
- US 3829505 A
- US 3941849 A
- US 5158922 A
- EP 700949 A
- US 5891818 A
- EP 700949 A0
- EP 761708 A
- JP 4145123 A
- US 5470813 A
- EP 743093 A
- WO 9740086 A
- WO 9933562 A
- WO 9816310 A
- WO 9901203 A
- WO 9919062 A
- WO 9919063 A
- DE 19905611
- EP 101007 A
- WO 9530476 A
- DE 19928123